# EUROPEAN PATENT APPLICATION

(11) **EP 4 549 401 A1**
(43) Date of publication of application: **07.05.2025**
(21) Application number: 24207382.3
(22) Date of filing: 18.10.2024
(51) Int. Cl.: C01G 53/506, C01G 53/84, H01M 4/505, H01M 4/525

(54) **POSITIVE ELECTRODE ACTIVE MATERIAL AND LITHIUM SECONDARY BATTERY COMPRISING THE SAME**

(30) Priority: 26.10.2023 KR 20230144435
(71) Applicant: ECOPRO BM CO., LTD., Cheongju-si, Chungcheongbuk-do 28116 (KR)
(72) Inventor: KIM, Sun Hwa, 28116 Cheongju-si, Chungcheongbuk-do (KR); LEE, Jae Kyun, 28116 Cheongju-si, Chungcheongbuk-do (KR); HEO, Seung Woo, 28116 Cheongju-si, Chungcheongbuk-do (KR); PARK, Sung Yoon, 28116 Cheongju-si, Chungcheongbuk-do (KR); HONG, Sung Un, 28116 Cheongju-si, Chungcheongbuk-do (KR); NAM, Yu Jin, 28116 Cheongju-si, Chungcheongbuk-do (KR); KWAK, Hwan Wook, 28116 Cheongju-si, Chungcheongbuk-do (KR); JO, Min Su, 28116 Cheongju-si, Chungcheongbuk-do (KR); SEON, Young Hoe, 28116 Cheongju-si, Chungcheongbuk-do (KR); KWON, O Hyeon, 28116 Cheongju-si, Chungcheongbuk-do (KR); CHUNG, Jae Bin, 28116 Cheongju-si, Chungcheongbuk-do (KR); YU, Hyun Jong, 28116 Cheongju-si, Chungcheongbuk-do (KR)
(74) Representative: BCKIP Part mbB

(57) **Abstract**

The present invention relates to a positive electrode active material and a lithium secondary battery including the same, and more particularly, to a positive electrode active material capable of maintaining the electrochemical properties of a lithium secondary battery using a lithium composite oxide as a positive electrode active material while preventing and/or mitigating gas generation and swelling due to the positive electrode active material in a lithium secondary battery by suppressing the excessive growth of primary particles and improving the crystallinity of primary particles, and a lithium secondary battery including the same.

## Description

### BACKGROUND

### 1. Field of the Invention

The present invention relates to a positive electrode active material and a lithium secondary battery including the same, and more particularly, to a positive electrode active material, capable of maintaining the electrochemical properties of a lithium secondary battery using a lithium composite oxide as a positive electrode active material while preventing and/or mitigating gas generation and swelling due to the positive electrode active material in a lithium secondary battery by suppressing the excessive growth of primary particles and improving the crystallinity of primary particles, and a lithium secondary battery including the same.

### 2. Discussion of Related Art

Batteries store power by using materials capable of undergoing electrochemical reactions at a positive electrode and a negative electrode. A representative example of batteries is a lithium secondary battery that stores electrical energy by the difference in chemical potential when lithium ions are intercalated/deintercalated into/from the positive electrode and the negative electrode.

The lithium secondary battery is manufactured by using materials capable of reversible intercalation/deintercalation of lithium ions as positive and negative electrode active materials and filling an organic electrolyte or a polymer electrolyte between the positive and negative electrodes.

A lithium composite oxide is used as a positive electrode active material for a lithium secondary battery, and as an example, composite oxides such as LiCoO₂, LiMn₂O₄, LiNiO₂, LiMnO₂, and the like are being studied.

Among the positive electrode active materials, LiCoO₂ is the most widely used due to its excellent lifetime and charge/discharge efficiency, but its price competitiveness is low because cobalt, which is used as a raw material, is expensive.

Lithium manganese oxides such as LiMnO₂ and LiMn₂O₄ have excellent thermal stability and low costs, but have small capacity and poor high temperature characteristics. In addition, an LiNiO₂-based positive electrode active material has high discharge capacity, but is difficult to synthesize due to active cation mixing of Li and Ni, and the rate performance and lifetime of the synthesized positive electrode active material are very low.

Therefore, in order to improve the low rate performance and lifetime of LiNiO₂ while maintaining its high reversible capacity, ternary lithium composite oxides such as the so-called NCM (Ni-Co-Mn) and NCA (Ni-Co-Al), in which part of the nickel is substituted with cobalt, manganese, and/or aluminum, or quaternary lithium composite oxides such as NCMA (Ni-Co-Mn-Al) have been developed. Since the reversible capacity is reduced as the nickel content in the ternary or quaternary lithium composite oxide decreases, research has been widely conducted to increase the nickel content in the lithium composite oxide.

However, as the content of nickel in the lithium composite oxide increases, cation mixing increases in the crystal structure, thereby reducing stability or increasing the content of unreacted lithium impurities such as LiOH and Li₂CO₃ on the surface.

As the change in crystallinity increases, such as an increase in cation mixing in the crystal structure of the lithium composite oxide, or the content of lithium impurities remaining on the surface of the lithium composite oxide increases, gas generation and swelling may be promoted in a lithium secondary battery using the lithium composite oxide as a positive electrode active material. As the content of lithium impurities remaining on the surface of the lithium composite oxide increases, a paste composition becomes gel-like due to lithium impurities when a paste for forming a positive electrode active material layer is prepared using the lithium composite oxide.

In order to solve the problem of gas generation due to lithium impurities remaining on the surface of the lithium composite oxide described above, a method of forming a metal oxide-derived coating layer or a polymer-derived coating layer by reacting lithium impurities on the surface of the lithium composite oxide with a coating raw material has been proposed, but when a coating layer is formed on the surface of the lithium composite oxide, the surface resistance characteristics of the lithium composite oxide change, thereby reducing the electrochemical properties such as charge/discharge capacity and/or rate performance of a lithium secondary battery using the lithium composite oxide as a positive electrode active material.

Therefore, there is a need to develop a positive electrode active material capable of maintaining the electrochemical properties of a lithium secondary battery using a lithium composite oxide as a positive electrode active material while preventing and/or mitigating gas generation and swelling due to the positive electrode active material.

### SUMMARY OF THE INVENTION

In the lithium secondary battery market, the growth of lithium secondary batteries for electric vehicles is the driving force, and accordingly, the demand for positive electrode active materials used in the lithium secondary batteries is continuously increasing.

For example, conventionally, lithium secondary batteries using lithium iron phosphate (LFP) have been mainly used in terms of ensuring safety, but recently, the use of nickel-based lithium composite oxides, which have a higher energy capacity per weight than LFP, is expanding (of course, relatively inexpensive LFP is still used to reduce costs).

In general, nickel-based lithium composite oxides, which have recently been mainly used as positive electrode active materials for high-capacity lithium secondary batteries, have a ternary composition such as NCM (Ni-Co-Mn) and NCA (Ni-Co-Al) or a quaternary composition such as NCMA (Ni-Co-Mn-Al).

As described above, in order to achieve high capacity of the ternary or quaternary nickel-based lithium composite oxide, the nickel content in the lithium composite oxide needs to be increased, but as the nickel content in the lithium composite oxide increases, the change in crystallinity may increase, such as an increase in cation mixing in the crystal structure of the lithium composite oxide, or the content of lithium impurities remaining on the surface of the lithium composite oxide may increase.

Accordingly, the present invention is directed to providing a positive electrode active material capable of maintaining the electrochemical properties of a lithium secondary battery using a lithium composite oxide as a positive electrode active material while preventing and/or mitigating gas generation and swelling due to the positive electrode active material in a lithium secondary battery by using a dopant that hinders the growth of primary particles constituting the lithium composite oxide during the calcination process and increasing the calcination temperature to suppress the excessive growth of primary particles and improve the crystallinity of primary particles.

The present invention is also directed to providing a positive electrode active material capable of preventing and/or mitigating cracks occurring due to strain caused by random volume contraction/expansion of primary particles during charging/discharging by reducing crystal defects in the crystal structure of the primary particles constituting the lithium composite oxide.

The present invention is also directed to providing a lithium secondary battery using the positive electrode active material defined herein.

The objects of the present invention are not limited to the above-described objects, and other objects and advantages of the present invention that are not described can be understood by the following description and will be more clearly understood by the embodiments of the present invention. In addition, it is apparent that the objects and advantages of the present invention can be realized by the means and combinations thereof indicated in the claims.

According to an aspect of the present invention, there is provided a positive electrode active material including primary particles capable of intercalation/deintercalation of lithium and secondary particles in which the primary particles are aggregated.

The secondary particles may include at least one selected from nickel, cobalt, manganese, and aluminum. The secondary particles preferably include nickel.

In addition, the interplanar distance (d-spacing) of the (003) plane in the crystal structure of the primary particles may vary slightly depending on the charging state and the composition (such as mole fraction of nickel) of the positive electrode active material.

For example, the mole fraction of nickel to all elements excluding lithium in the positive electrode active material may be 70% or more, and when the positive electrode active material is charged to 4.3 V, the maximum value (d1) of the interplanar distance (d-spacing) of the (003) plane in the crystal structure of the primary particles may be less than 0.4794 nm, and the minimum value (d2) of the interplanar distance (d-spacing) of the (003) plane in the crystal structure of the primary particles present in the secondary particles may be 0.456 nm or more.

As described above, the maximum value (d1) and/or the minimum value (d2) of the interplanar distance (d-spacing) of the (003) plane in the crystal structure of the primary particles may vary slightly depending on the charging state and the composition (such as mole fraction of nickel) of the positive electrode active material. However, since the difference (Δd) between the maximum value (d1) and the minimum value (d2) of the interplanar distance (d-spacing) of the (003) plane in the crystal structure of the primary particles is not significantly affected by the charging state of the positive electrode active material or the change in the mole fraction of nickel in the positive electrode active material, the difference may be used as an indicator of crystal defects in the crystal structure of primary particles.

Therefore, the smaller the difference (Δd) between the maximum value (d1) and the minimum value (d2) of the interplanar distance (d-spacing) of the (003) plane in the crystal structure of the primary particles, the smaller the crystal defects in the crystal structure of the primary particles, thereby preventing and/or mitigating cracks occurring due to strain caused by random volume contraction/expansion of primary particles during charging/discharging.

As defined herein, when the positive electrode active material is charged to 4.3 V, the difference (Δd) between the maximum value (d1) and the minimum value (d2) of the interplanar distance (d-spacing) of the (003) plane in the crystal structure of the primary particles may be less than 0.019.

It is possible to reduce crystal defects (particularly line defects) in the crystal structure of primary particles constituting the lithium composite oxide by ensuring that the difference (Δd) between the maximum value (d1) and the minimum value (d2) of the interplanar distance (d-spacing) of the (003) plane in the crystal structure of primary particles present in the secondary particles is less than 0.019 nm, thereby preventing and/or mitigating cracks occurring due to strain caused by random volume contraction/expansion of primary particles during charging/discharging.

The positive electrode active material may have a crystallite size of 70 nm to 130 nm.

During the calcination process of the positive electrode active material, a dopant that hinders the growth of primary particles is used and the calcination temperature is increased in order to suppress excessive growth of primary particles and improve the crystallinity of the primary particles, and thus the positive electrode active material may have a crystallite size of 70 nm to 135 nm.

The secondary particles may be represented by Chemical Formula 1 below.

[Chemical Formula 1] LiₐNi_{1-(b+c+d)}Co_{b}M1_{c}M2_{d}O₂

Here, M1 is at least one selected from Mn and Al, M2 is at least one selected from Na, K, Mg, Ca, Ba, Mn, B, Ce, Hf, Ta, Cr, F, Al, V, Ti, Fe, Zr, Zn, Si, Y, Nb, Ga, Sn, Mo, W, P, Sr, Ge, Nd, Gd, and Cu, M1 and M2 are different, and 0.5≤a≤1.5, 0≤b≤0.20, 0≤c≤0.30, 0≤d≤0.10.

In the secondary particles, the mole fraction of nickel to all elements excluding lithium may be 70% or more.

According to another aspect of the present invention, there is provided a positive electrode including the positive electrode active material described above.

According to still another aspect of the present invention, there is provided a lithium secondary battery using the positive electrode described above.

### BRIEF DESCRIPTION OF THE DRAWINGS

The above and other objects, features and advantages of the present invention will become more apparent to those of ordinary skill in the art by describing exemplary embodiments thereof in detail with reference to the accompanying drawings, in which:
FIG. 1 is a cross-sectional SEM image of the positive electrode active material of Example 1 charged to 4.3 V;
FIG. 2 is a cross-sectional SEM image of the positive electrode active material of Comparative Example 1 charged to 4.3 V;
FIG. 3 is a cross-sectional SEM image of the positive electrode active material of Comparative Example 2 charged to 4.3 V;
FIG. 4 is a cross-sectional SEM image of the positive electrode active material of Comparative Example 4 charged to 4.3 V; and
FIG. 5 is a cross-sectional SEM image of the positive electrode active material of Comparative Example 5 charged to 4.3 V

### DETAILED DESCRIPTION OF EXEMPLARY EMBODIMENTS

For a better understanding of the present invention, certain terms are defined herein for convenience. Unless otherwise defined herein, scientific and technical terms used in the present invention will have meanings commonly understood by those skilled in the art. In addition, unless otherwise specified in the context, the singular should be understood to include the plural, and the plural should be understood to include the singular. Amounts or ratios indicated herein are molar amounts or molar ratios, unless otherwise specified in the context. Amounts or ratios indicated herein are molar amounts or molar ratios, unless otherwise specified in the context.

### Positive electrode active material

The positive electrode active material according to an aspect of the present invention includes primary particles capable of reversible intercalation/deintercalation of lithium ions and secondary particles in which the primary particles are aggregated. For convenience, the primary particles and/or the secondary particles may be referred to as lithium composite oxides herein.

The lithium composite oxide is a metal composite oxide capable of intercalation/deintercalation of lithium ions and has a layered crystal structure belonging to the R-3m space group. The lithium composite oxide with a layered crystal structure has specific peaks in the 2θ region of 18° to 20° in the diffraction pattern obtained from XRD analysis.

The lithium composite oxide may include at least one selected from nickel, cobalt, manganese, and aluminum. The lithium composite oxide may be preferably a lithium nickel-based composite oxide containing nickel. The lithium composite oxide may be a lithium nickel-based composite oxide containing nickel and at least one transition metal. Further, the lithium nickel-based composite oxide optionally comprises at least one main group metal, at least one transition metal, at least one metalloid and/or at least one non-metal.

In an embodiment of the present invention, in order to improve the low rate and lifetime characteristics of LiNiO₂ while maintaining its high reversible capacity, the lithium nickel-based composite oxide may be a ternary lithium composite oxide such as the so-called NCM (Ni-Co-Mn) and NCA (Ni-Co-Al), in which part of the nickel is substituted with cobalt, manganese, and/or aluminum, or a quaternary lithium composite oxide such as NCMA (Ni-Co-Mn-Al). In another embodiment of the present invention, the lithium nickel-based composite oxide may be a cobalt-free lithium composite oxide.

Primary particles constituting the secondary particles may have a rod shape, an elliptical shape, and/or an irregular shape. In addition, unless specifically intended during the manufacturing process, primary particles of various shapes may be present in the same positive electrode active material. In addition, the primary particle refers to a particle unit in which no grain boundary appears when observed at a magnification of 5,000 to 20,000x using a scanning electron microscope.

The primary particles constituting the lithium composite oxide as defined herein may have an average particle diameter of 0.04 µm to 2 µm, 0.06 µm to 2 µm, 0.08 µm to 2 µm, 0.1 µm to 2 µm, 0.25 µm to 2 µm, 0.04 µm to 1 µm, 0.06 µm to 1.0 µm, 0.08 µm to 1 µm, 0.1 µm to 1 µm, 0.25 µm to 1 µm, 0.04 µm to 0.75 µm, 0.06 µm to 0.75 µm, 0.08 µm to 0.75 µm, 0.1 µm to 0.75 µm, or 0.25 µm to 0.75 µm. The average particle diameter of the primary particles may be the average value of the length of the primary particles in the major axis direction and the length of the primary particles in the minor axis direction ([major axis length + minor axis length]/2).

The primary particles may be composed of a single crystallite or a plurality of crystallites. The crystallite size may be calculated through XRD analysis of the positive electrode active material.

For example, the crystallite size may be calculated using ① all peaks present in the diffraction pattern obtained from XRD analysis (a method using pattern fitting and Rietveld refinement) or ② substituting the full width at half maximum of specific peaks present in the diffraction pattern obtained from XRD analysis (such as peaks specific to the crystal plane corresponding to the (003) plane) into the Scherrer equation.

The size of crystallites present in the lithium composite oxide may be preferably 70 nm to 130 nm. In addition, the size of crystallites present in the lithium composite oxide may be preferably 70 nm to 120 nm, 70 nm to 110 nm, 70 nm to 105 nm, 70 nm to 103 nm, 75 nm to 120 nm, 75 nm to 110 nm, 75 nm to 105 nm, 75 nm to 103 nm, 80 nm to 120 nm, 80 nm to 110 nm, 80 nm to 105 nm, 80 nm to 103 nm, 85 nm to 120 nm, 85 nm to 110 nm, 85 nm to 105 nm, 85 nm to 103 nm, 90 nm to 120 nm, 90 nm to 110 nm, 90 nm to 105 nm, or 90 nm to 103 nm. When the crystallite size is less than 70 nm, the size of the crystallites constituting the positive electrode active material is excessively small, and thus the particle strength of the lithium composite oxide may be reduced. In addition, as the sizes of crystallites and primary particles are excessively reduced, the specific surface area may increase, thereby promoting gas generation due to side reactions with an electrolyte.

On the other hand, when the crystallite size is greater than 130 nm, the primary particles grow excessively, thereby reducing the electrochemical properties such as rate performance of a lithium secondary battery using the primary particles as a positive electrode active material.

As will be described later, according to the present invention, the positive electrode active material may have a crystallite size of 70 nm to 130 nm by using a dopant that hinders the growth of primary particles during the calcination process of the positive electrode active material and increasing the calcination temperature to suppress the excessive growth of primary particles and improve the crystallinity of the primary particles.

As such, the dopant that hinders the growth of primary particles during the calcination process of the positive electrode active material may be at least one selected from Al₂O₃, Al(OH)₃, AlPO₄, Al(PO₃)₃, WO₃, Nb₂O₅, TiO₂, H₃BO₃, H₂B₄O₇, B₂O₃, B₂O₅, C₆H₅B(OH)₂, (C₆H₅O)₃B, [(CH₃(CH₂)₃O)₃B, C₃H₉B₃O₆, and (C₃H₇O₃)B.

When the calcination temperature is increased (that is, over-calcinated) without using a dopant that hinders the growth of primary particles during the calcination process of the positive electrode active material, the crystallites and the primary particles may excessively grow. In this case, a phase transition (for example, layered structure → rock salt structure) may occur on the surfaces of the primary and secondary particles due to cation mixing. Changes in the crystal structure such as the phase transition may change the surface resistance of the positive electrode active material and reduce the lifetime of the positive electrode active material.

On the other hand, when a dopant that hinders the growth of primary particles is used during the calcination process while maintaining the calcination temperature of the positive electrode active material, the growth of the crystallites and the primary particles may be excessively suppressed. In this case, as the sizes of the crystallites and the primary particles are excessively reduced, the specific surface area may increase, thereby promoting gas generation due to side reactions with an electrolyte.

The average particle diameter of the secondary particles may be 0.5 µm to 20 µm, 2.0 µm to 18 µm, 2.0 µm to 15 µm, or 3.0 µm to 12 µm. When the secondary particles are small particles, the average particle diameter of the secondary particles may be 7 µm or less, 6.5 µm or less, 6 µm or less, 5.5 µm or less, 5 µm or less, 4.5 µm or less, 4 µm or less, 3.5 µm or less, or 3 µm or less, 0.5 µm or more, 1 µm or more, 1.5 µm or more, or 2 µm or more. When the secondary particles are small particles, the upper and lower limits of the average particle diameter of the secondary particles may be appropriately selected within a range that satisfies the above definition. When the secondary particles are large particles, the average particle diameter of the secondary particles may be more than 7 µm, 7.5 µm or more, 8 µm or more, 8.5 µm or more, 9 µm or more, 9.5 µm or more, 10 µm or more, 10.5 µm or more, 11 µm or more, 11.5 µm or more, or 12 µm or more, 30 µm or less, 27.5 µm or less, 25 µm or less, 22.5 µm or less, 20 µm or less, 17.5 µm or less, or 15 µm or less. When the secondary particles are large particles, the upper and lower limits of the average particle diameter of the secondary particles may be appropriately selected within a range that satisfies the above definition. When the positive electrode active material has a bimodal particle size distribution including secondary particles, which are small and large particles, the average particle diameter of the positive electrode active material may be 4 µm to 18 µm, 6 µm to 16 µm, or 8 µm to 14 µm.

The average particle diameter of the secondary particles may vary depending on the number of primary particles constituting the secondary particles. The average particle diameter (D50) of the secondary particles may be calculated using a laser diffraction method. For example, after dispersing secondary particles in a dispersion medium and irradiating the same with ultrasonic waves at about 28 kHz at an output of 60 W using a commercially available laser diffraction particle size measurement device (such as Microtrac MT 3000), a volume cumulative particle size distribution graph is obtained, and the particle size corresponding to 50% of the volume cumulative amount can be defined as the average particle diameter (D₅₀). In other cases, the average particle diameter of the secondary particles may be calculated as the average value of the particle diameters of secondary particles confirmed through SEM images.

According to the present invention, by using a dopant that hinders the growth of primary particles and increasing the calcination temperature to suppress the excessive growth of primary particles and improve the crystallinity of the primary particles, it is possible to reduce crystal defects in the crystal structure of the primary particles and prevent and/or mitigate cracks occurring due to strain caused by random volume contraction/expansion of primary particles during charging/discharging.

Crystal defects in the crystal structure of the primary particles may include point defects and/or line defects, but according to the present invention, in particular, line defects among the crystal defects in the crystal structure of the primary particles may be reduced. The line defects may be present extending in a direction parallel to the (003) plane in the crystal structure of the primary particles.

As such, when line defects are present in the direction parallel to the (003) plane in the crystal structure of the primary particles, strain caused by random volume contraction/expansion of the primary particles is accumulated during charging/discharging, and thus, cracks may occur in the primary particles along the line defects. In this case, cracks due to line defects in the primary particles are different from cracks occurring along the grain boundary of neighboring primary particles as strain is accumulated due to random volume contraction/expansion of primary particles during charging/discharging.

Line defects present in the crystal structure of the primary particles may be caused by dislocation of the layered crystal structure in the primary particles. When dislocation of the layered crystal structure in the primary particles occurs, the interplanar distance between some crystal planes may be changed. Such change in the interplanar distance may be measured through XRD analysis of the positive electrode active material using Cu-Kα rays or other known methods.

For example, from the diffraction pattern obtained from XRD analysis of the positive electrode active material charged under predetermined conditions using Cu-Kα rays, when the diffraction peak (2θ=18° to 20°) specific to the (003) plane is split, it can be expected that crystal defects have occurred on the (003) plane in the primary particles.

Therefore, the change in interplanar distance may be quantified by substituting the difference in 2θ between the two split peaks in the 2θ region of 18° to 20° into Bragg's law (interplanar distance (d)=λ/2sinθ). In another method, after obtaining a TEM image (such as HAADF-STEM) fitted to the (003) plane from the cross section of the primary particles, the distance from the neighboring (003) plane may be measured.

At this time, the charging conditions of the positive electrode active material before XRD analysis may be general formation and/or charging conditions of a lithium secondary battery. For example, the positive electrode active material may be charged to 4.3 V before XRD analysis.

More specifically, after a lithium secondary battery (half-cell), which uses the positive electrode active material as a positive electrode and a lithium foil as a negative electrode, is charged/discharged 2 times under the conditions of 25 °C, a voltage range of 3.0 V to 4.3 V, and 0.05 C/0.05 C and then charged to 4.3 V again, the positive electrode active material is recovered from the half-cell to perform XRD analysis.

As described above, through XRD analysis of the positive electrode active material charged to 4.3 V, when peak splitting does not occur in the 2θ region of 18° to 20° or peak splitting occurs, the difference in 2θ between the two split peaks may be preferably 0.75° or less, 0.70° or less, 0.69° or less, or 0.681° or less.

As described above, the maximum value (d1) and/or the minimum value (d2) of the interplanar distance (d-spacing) of the (003) plane in the crystal structure of the primary particles may vary slightly depending on the charging state and the composition (such as mole fraction of nickel) of the positive electrode active material.

However, since the difference (Δd) between the maximum value (d1) and the minimum value (d2) of the interplanar distance (d-spacing) of the (003) plane in the crystal structure of the primary particles is not significantly affected by the charging state of the positive electrode active material or the change in the mole fraction of nickel in the positive electrode active material, the difference may be used as an indicator of crystal defects in the crystal structure of primary particles.

Therefore, the smaller the difference (Δd) between the maximum value (d1) and the minimum value (d2) of the interplanar distance (d-spacing) of the (003) plane in the crystal structure of the primary particles, the smaller the crystal defects in the crystal structure of the primary particles, thereby preventing and/or mitigating cracks occurring due to strain caused by random volume contraction/expansion of primary particles during charging/discharging.

For example, when the mole fraction of nickel to all elements excluding lithium in the positive electrode active material may be 70% or more, and when the positive electrode active material is charged to 4.3 V, the maximum value (d1) of the interplanar distance (d-spacing) of the (003) plane in the crystal structure of the primary particles present in the secondary particles may be less than 0.4794 nm, 0.4789 nm or less, 0.478 nm or less, or 0.4775 nm or less, and the minimum value (d2) of the interplanar distance (d-spacing) of the (003) plane in the crystal structure of the primary particles present in the secondary particles may be 0.456 nm or more, 0.457 nm or more, 0.458 nm or more, 0.459 nm or more, or 0.4598 nm or more.

When the maximum value (d1) of the interplanar distance (d-spacing) of the (003) plane in the crystal structure of the primary particles present in the secondary particles is 0.4794 nm or more, the interplanar distance of another (003) plane neighboring the (003) plane may become excessively narrow. In addition, when the minimum value (d2) of the interplanar distance (d-spacing) of the (003) plane in the crystal structure of the primary particles present in the secondary particles is 0.456 nm or less, the interplanar distance of another (003) plane neighboring the (003) plane may become excessively wide. Thus, since an imbalance in the interplanar distance between neighboring (003) planes occurs, line defects may occur along a direction parallel to the (003) plane in the crystal structure of the primary particles.

As defined herein, when the positive electrode active material is charged to 4.3 V, the difference (Δd) between the maximum value (d1) and the minimum value (d2) of the interplanar distance (d-spacing) of the (003) plane in the crystal structure of the primary particles present in the secondary particles may be preferably less than 0.019 nm, 0.018 nm or less, 0.0175 nm or less, or 0.0172 nm or less.

It is possible to reduce crystal defects (particularly line defects) in the crystal structure of the primary particles constituting the lithium composite oxide by ensuring that the difference (Δd) between the maximum value (d1) and the minimum value (d2) of the interplanar distance (d-spacing) of the (003) plane in the crystal structure of the primary particles present in the secondary particles is less than 0.019 nm, thereby preventing and/or mitigating cracks occurring due to strain caused by random volume contraction/expansion of primary particles during charging/discharging.

The lithium composite oxide defined herein may be represented by Chemical Formula 1 below. Unless otherwise defined, the primary particles and secondary particles also have a composition represented by Chemical Formula 1 below.

[Chemical Formula 1] LiₐNi_{1-(b+c+d)}Co_{b}M1_{c}M2_{d}O₂

Here, M1 is at least one selected from Mn and Al, M2 is at least one selected from Na, K, Mg, Ca, Ba, Mn, B, Ce, Hf, Ta, Cr, F, Al, V, Ti, Fe, Zr, Zn, Si, Y, Nb, Ga, Sn, Mo, W, P, Sr, Ge, Nd, Gd, and Cu, M1 and M2 are different, and 0.5≤a≤1.5, 0≤b≤0.20, 0≤c≤0.30, 0≤d≤0.10.
a, which represents the ratio of lithium to all elements excluding lithium in the lithium composite oxide (Li/(Ni+Co+M1+M2)), may be 0.5 or more and 1.5 or less, 0.75 or more and 1.25 or less, 0.90 or more and 1.1 or less, or 0.95 or more and 1.05 or less.

In an embodiment of the present invention, the mole fraction of nickel to all elements excluding lithium in the lithium composite oxide (Ni/(Ni+Co+M1+M2)) may be 70% or more. In this case, b+c+d in Chemical Formula 1 is 0.30 or less.

In another embodiment of the present invention, the mole fraction of nickel to all elements excluding lithium in the lithium composite oxide (Ni/(Ni+Co+M1+M2)) may be 75% or more (where b+c+d is 0.25 or less), 80% or more (where b+c+d is 0.20 or less), 85% or more (where b+c+d is 0.15 or less), or 90% or more (where b+c+d is 0.10 or less).

When the lithium composite oxide includes cobalt, the mole fraction of cobalt to all elements excluding lithium in the lithium composite oxide (Co/(Ni+Co+M1+M2)) may be 20% or less (where b is 0.20 or less), 15% or less (where b is 0.15 or less), 10% or less (where b is 0.10 or less) or 5% or less (where b is 0.05 or less). When the secondary particles include cobalt, b in Chemical Formula 1 is greater than 0.

When the lithium composite oxide includes manganese and/or aluminum, the mole fraction of manganese and/or aluminum to all elements excluding lithium in the lithium composite oxide (M1/(Ni+Co+M1+M2)) may be 30% or less (where c is 0.30 or less), 25% or less (where c is 0.25 or less), 20% or less (where c is 0.20 or less), 15% or less (where c is 0.15 or less), 10% or less (where c is 0.10 or less), or 5% or less (where c is 0.05 or less). When the secondary particles include manganese and/or aluminum, c in Chemical Formula 1 is greater than 0.

In Chemical Formula 1, M2 refers to a dopant present in the lithium composite oxide. The dopant may be present in a doped state in the crystal lattice of the primary particles. In addition, in Chemical Formula 1, M2 may optionally include a dopant used to hinder the growth of primary particles during the calcination of the positive electrode active material. As the dopant is doped, the electrochemical properties of the positive electrode active material may be improved.

When the lithium composite oxide includes a dopant, M2 in Chemical Formula 1 is greater than 0. In addition, the mole fraction of the dopant to all elements excluding lithium in the lithium composite oxide (M2/(Ni+Co+M1+M2)) may be 10% or less (where d is 0.10 or less), 5% or less (where d is 0.05 or less), 4% or less (where d is 0.04 or less), 3% or less (where d is 0.03 or less), 2% or less (where d is 0.02 or less), 1% or less (where d is 0.01 or less), 0.5% or less (where d is 0.005 or less), 0.4% or less (where d is 0.004 or less), 0.3% or less (where d is 0.003 or less), 0.2% or less (where d is 0.002 or less), or 0.1% or less (where d is 0.001 or less).

When the lithium composite oxide optionally includes a dopant, the dopant may include at least one selected from Na, K, Mg, Ca, Ba, Mn, B, Ce, Hf, Ta, Cr, F, Al, V, Ti, Fe, Zr, Zn, Si, Y, Nb, Ga, Sn, Mo, W, P, Sr, Ge, Nd, Gd, and Cu, or at least one selected from B, Al, Nb, and W. The type and combination of the dopant may be appropriately selected within a range that does not negatively affect the electrochemical properties and stability of the positive electrode active material.

### Lithium secondary battery

According to another aspect of the present invention, there is provided a positive electrode including a positive electrode current collector and a positive electrode active material layer formed on the positive electrode current collector. The positive electrode active material layer may include the positive electrode active material according to various embodiments of the present invention. Since the content of positive electrode active material is the same as described above, detailed description will be omitted for convenience, and only the remaining components not described above will be described below.

The positive electrode current collector is not particularly limited as long as it does not cause a chemical change in a battery and has conductivity, and for example, stainless steel, aluminum, nickel, titanium, calcined carbon, or aluminum or stainless steel whose surface is treated with carbon, nickel, titanium or silver may be used. In addition, the positive electrode current collector may conventionally have a thickness of 3 to 500 µm, and fine irregularities may be formed on the surface of the current collector, thereby increasing the adhesive strength of a positive electrode active material. For example, the positive electrode current collector may be used in various forms such as a film, a sheet, a foil, a net, a porous body, foam, a non-woven fabric, etc.

The positive electrode active material layer may be prepared by coating the positive electrode current collector with a positive electrode slurry composition including the positive electrode active material, a conductive material, and optionally as needed, a binder.

Here, the positive electrode active material is included at 80 to 99 wt%, and specifically, 85 to 98.5 wt% with respect to the total weight of a positive electrode slurry for forming the positive electrode active material layer. When the positive electrode active material is included in the above content range, excellent capacity characteristics may be exhibited, but the present invention is not limited thereto.

The conductive material is used to impart conductivity to an electrode, and is not particularly limited as long as it has electron conductivity without causing a chemical change in a battery. A specific example of the conductive material may be graphite such as natural graphite or artificial graphite; a carbon-based material such as carbon black, acetylene black, Ketjen black, channel black, furnace black, lamp black, thermal black or a carbon fiber; a metal powder or metal fiber consisting of copper, nickel, aluminum, or silver; a conductive whisker consisting of zinc oxide or potassium titanate; a conductive metal oxide such as titanium oxide; or a conductive polymer such as a polyphenylene derivative, and one or a mixture of two or more thereof may be used. The conductive material may be generally contained at 0.1 to 15 wt% with respect to the total weight of a positive electrode slurry for forming the positive electrode active material layer.

The binder serves to improve the adhesion between particles of the positive electrode active material and the adhesion between the positive electrode active material and the current collector. A specific example of the binder may be polyvinylidene fluoride (PVDF), a vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, tetrafluoroethylene, polyethylene, polypropylene, an ethylenepropylene-diene polymer (EPDM), a sulfonated EPDM, styrene butadiene rubber (SBR), fluorine rubber, or various copolymers thereof, and one or a mixture of two or more thereof may be used. The binder may be included at 0.1 to 15 wt% with respect to the total weight of a positive electrode slurry for forming the positive electrode active material layer.

The positive electrode may be manufactured according to a conventional method of manufacturing a positive electrode, except that the above-described positive electrode active material is used. Specifically, the positive electrode may be manufactured by coating the positive electrode current collector with a positive electrode slurry composition prepared by dissolving or dispersing the positive electrode active material, and optionally, a binder and a conductive material in a solvent, and drying and rolling the resulting product.

The solvent may be a solvent generally used in the art, and may be dimethyl sulfoxide (DMSO), isopropyl alcohol, N-methylpyrrolidone (NMP), acetone or water, and one or a mixture of two or more thereof may be used. In consideration of the coating thickness and production yield of a slurry, the solvent is used at a sufficient amount for dissolving or dispersing the positive electrode active material, the conductive material and the binder and then imparting a viscosity for exhibiting excellent thickness uniformity when the slurry is applied to manufacture a positive electrode.

In addition, in another exemplary embodiment, the positive electrode may be manufactured by casting the positive electrode slurry composition on a separate support, and laminating a film obtained by delamination from the support on the positive electrode current collector.

Moreover, still another aspect of the present invention provides an electrochemical device including the above-described positive electrode. The electrochemical device may be, specifically, a battery, a capacitor, and more specifically, a lithium secondary battery.

The lithium secondary battery may specifically include a positive electrode, a negative electrode disposed opposite to the positive electrode, and a separator and a liquid electrolyte, which are interposed between the positive electrode and the negative electrode. Here, since the positive electrode is the same as described above, for convenience, detailed description of the positive electrode will be omitted, and other components which have not been described above will be described in detail.

The lithium secondary battery may further include a battery case accommodating an electrode assembly of the positive electrode, the negative electrode and the separator, and optionally, a sealing member for sealing the battery case.

The negative electrode may include a negative electrode current collector and a negative electrode active material layer disposed on the negative electrode current collector.

The negative electrode current collector is not particularly limited as long as it has high conductivity without causing a chemical change in a battery, and may be, for example, copper, stainless steel, aluminum, nickel, titanium, calcined coke, or copper or stainless steel whose surface is treated with carbon, nickel, titanium or silver, or an aluminum-cadmium alloy. In addition, the negative electrode current collector may generally have a thickness of 3 to 500 µm, and like the positive electrode current collector, fine irregularities may be formed on the current collector surface, thereby enhancing the binding strength of the negative electrode active material. For example, the negative electrode current collector may be used in various forms such as a film, a sheet, a foil, a net, a porous body, foam, a non-woven fabric, etc.

The negative electrode active material layer may be formed by coating the negative electrode current collector with a negative electrode slurry composition including the negative electrode active material, a conductive material, and optionally as needed, a binder.

As the negative electrode active material, a compound enabling the reversible intercalation and deintercalation of lithium may be used. A specific example of the negative electrode active material may be a carbonaceous material such as artificial graphite, natural graphite, graphitized carbon fiber or amorphous carbon; a metallic compound capable of alloying with lithium, such as Si, Al, Sn, Pb, Zn, Bi, In, Mg, Ga, Cd, an Si alloy, an Sn alloy or an Al alloy; a metal oxide capable of doping and dedoping lithium such as SiO_{β} (0<β<2), SnO₂, vanadium oxide, or lithium vanadium oxide; or a composite including the metallic compound and the carbonaceous material such as an Si-C composite or an Sn-C composite, and any one or a mixture of two or more thereof may be used. In addition, as the negative electrode active material, a metallic lithium thin film may be used. In addition, as a carbon material, both low-crystalline carbon and high-crystalline carbon may be used. Representative examples of the low-crystalline carbon include soft carbon and hard carbon, and representative examples of the high-crystalline carbon include amorphous, sheet-type, flake-type, spherical or fiber-type natural or artificial graphite, Kish graphite, pyrolytic carbon, mesophase pitch-based carbon fiber, meso-carbon microbeads, mesophase pitches, and high-temperature calcined carbon such as petroleum or coal tar pitch derived cokes.

The negative electrode active material may be included at 80 to 99 wt% with respect to the total weight of a negative electrode slurry for forming the negative electrode active material layer.

The binder is a component aiding bonding between a conductive material, an active material and a current collector, and may be generally added at 0.1 to 10 wt% with respect to the total weight of a negative electrode slurry for forming the negative electrode active material layer. Examples of the binder may include polyvinylidene fluoride (PVDF), polyvinyl alcohol, carboxymethylcellulose (CMC), starch, hydroxypropylcellulose, regenerated cellulose, polyvinylpyrrolidone, tetrafluoroethylene, polyethylene, polypropylene, ethylene-propylene-diene monomer (EPDM), sulfonated EPDM, styrene butadiene rubber, nitrile-butadiene rubber, fluorine rubber, and various copolymers thereof.

The conductive material is a component for further improving the conductivity of the negative electrode active material, and may be added at 10 wt% or less, and preferably, 5 wt% or less with respect to the total weight of a negative electrode slurry for forming the negative electrode active material layer. The conductive material is not particularly limited as long as it does not cause a chemical change in the battery, and has conductivity, and may be, for example, graphite such as natural graphite or artificial graphite; carbon black such as acetylene black, Ketjen black, channel black, furnace black, lamp black or thermal black; a conductive fiber such as a carbon fiber or a metal fiber; a conductive powder such as fluorinated carbon, aluminum, or nickel powder; a conductive whisker such as zinc oxide or potassium titanate; a conductive metal oxide such as titanium oxide; or a conductive material such as a polyphenylene or a derivative thereof.

In an exemplary embodiment, the negative electrode active material layer may be prepared by coating the negative electrode current collector with a negative electrode slurry composition prepared by dissolving or dispersing a negative electrode active material, and optionally, a binder and a conductive material in a solvent, and drying the coated composition, or may be prepared by casting the negative electrode slurry composition on a separate support and then laminating a film delaminated from the support on the negative electrode current collector.

Meanwhile, in the lithium secondary battery, the separator is not particularly limited as long as it is generally used in a lithium secondary battery to separate a negative electrode from a positive electrode and provide a diffusion path for lithium ions, and particularly, the separator has low resistance to ion mobility of a liquid electrolyte and an excellent electrolyte solution impregnability. Specifically, a porous polymer film, for example, a porous polymer film prepared of a polyolefin-based polymer such as an ethylene homopolymer, a propylene homopolymer, an ethylene/butene copolymer, an ethylene/hexene copolymer and an ethylene/methacrylate copolymer, or a stacked structure including two or more layers thereof may be used. In addition, a conventional porous non-woven fabric, for example, a non-woven fabric formed of a high melting point glass fiber or a polyethylene terephthalate fiber may be used. In addition, a coated separator including a ceramic component or a polymer material may be used to ensure thermal resistance or mechanical strength, and may be optionally used in a single- or multi-layered structure.

In addition, the electrolyte used in the present invention may be an organic electrolyte, an inorganic electrolyte, a solid polymer electrolyte, a gel-type polymer electrolyte, a solid inorganic electrolyte, or a molten-type inorganic electrolyte, which is able to be used in the production of a lithium secondary battery, but the present invention is not limited thereto.

Specifically, the electrolyte may include an organic solvent and a lithium salt.

The organic solvent is not particularly limited as long as it can serve as a medium enabling the movement of ions involved in an electrochemical reaction of a battery. Specifically, the organic solvent may be an ester-based solvent such as methyl acetate, ethyl acetate, γ-butyrolactone, or ε-caprolactone; an ether-based solvent such as dibutyl ether or tetrahydrofuran; a ketone-based solvent such as cyclohexanone; an aromatic hydrocarbon-based solvent such as benzene or fluorobenzene; a carbonate-based solvent such as dimethyl carbonate (DMC), diethyl carbonate (DEC), methyl ethyl carbonate (MEC), ethyl methyl carbonate (EMC), ethylene carbonate (EC), or propylene carbonate (PC); an alcohol-based solvent such as ethyl alcohol or isopropyl alcohol; a nitrile-based solvent such as R-CN (R is a linear, branched or cyclic C2 to C20 hydrocarbon group, and may include a double bonded aromatic ring or an ether bond); an amide-based solvent such as dimethylformamide; a dioxolane-based solvent such as 1,3-dioxolane; or a sulfolane-based solvent. Among these, a carbonate-based solvent is preferably used, and a mixture of a cyclic carbonate (for example, ethylene carbonate or propylene carbonate) having high ion conductivity and high permittivity to increase the charging/discharging performance of a battery and a low-viscosity linear carbonate-based compound (for example, ethyl methyl carbonate, dimethyl carbonate or diethyl carbonate) is more preferably used. In this case, by using a mixture of a cyclic carbonate and a chain-type carbonate in a volume ratio of approximately 1:1 to 1:9, the electrolyte solution may exhibit excellent performance.

The lithium salt is not particularly limited as long as it is a compound capable of providing a lithium ion used in a lithium secondary battery. Specifically, the lithium salt may be LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂. The concentration of the lithium salt is preferably in the range of 0.1 to 2.0M. When the concentration of the lithium salt is included in the above-mentioned range, since the electrolyte has suitable conductivity and viscosity, the electrolyte solution can exhibit excellent electrolytic performance and lithium ions can effectively migrate.

When the electrolyte used herein is a solid electrolyte, for example, a solid inorganic electrolyte such as a sulfide-based solid electrolyte, an oxide-based solid electrolyte, a nitride-based solid electrolyte, or a halide-based solid electrolyte may be used, and preferably, a sulfide-based solid electrolyte is used.

As a material for a sulfide-based solid electrolyte, a solid electrolyte containing Li, an X element Wherein, X is at least one selected from P, As, Sb, Si, Ge, Sn, B, Al, Ga and In) and S may be used. Examples of the sulfide-based solid electrolyte material may include Li₂S-P₂S₅, Li₂S-P₂S-LiX (wherein, X is a halogen element such as I or Cl), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (wherein, m and n are integers, and Z is Ge, Zn or Ga), Li₂S-GeS₂, Li₂S-SiS₂-Li₃PO₄, and Li₂S-SiS₂-LiₚMO_{q} (wherein, p and q are integers, and M is P, Si, Ge, B, Al, Ga or In).

A solid electrolyte, and preferably, a sulfide-based solid electrolyte may be amorphous, crystalline, or a state in which an amorphous phase and crystalline phase are mixed.

Materials for an oxide-based solid electrolyte include Li₇La₃Zr₂O₁₂, Li₇₋ₓLa₃Zr₁₋ₓNbₓO₁₂, Li₇₋₃ₓLa₃Zr₂AlₓO₁₂, Li₃ₓLa_{2/3-x}TiO₃, Li₁₊ₓAlₓTi₂₋ₓ(PO₄)₃, Li₁₊ₓAlₓGe₂₋ₓ(PO₄)₃, Li₃PO₄, Li₃₊ₓPO₄₋ₓNₓ (LiPON), and Li₂₊₂ₓZn₁₋ₓGeO₄ (LISICON).

The above-described solid electrolyte may be disposed as a separate layer (solid electrolyte layer) between a positive electrode and a negative electrode. In addition, the solid electrolyte may be partially included in a positive electrode active material layer of the positive electrode independent of the solid electrolyte layer, or the solid electrolyte may be partially included in a negative electrode active material of the negative electrode independent of the solid electrolyte layer.

To enhance the lifetime characteristics of the battery, inhibit a decrease in battery capacity, and enhance the discharge capacity of the battery, the electrolyte may further include one or more types of additives, for example, a haloalkylene carbonate-based compound such as difluoroethylene carbonate, pyridine, triethylphosphite, triethanolamine, cyclic ether, ethylene diamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol or aluminum trichloride, in addition to the components of the electrolyte. Here, the additive(s) may be included at 0.1 to 5 wt% with respect to the total weight of the electrolyte.

Since the lithium secondary battery including the positive electrode active material according to the present invention stably exhibits an excellent discharge capacity, excellent output characteristics and excellent lifetime characteristics, it is useful in portable devices such as a mobile phone, a notebook computer and a digital camera and an electric vehicle field such as a hybrid electric vehicle (HEV).

The outer shape of the lithium secondary battery according to the present invention is not particularly limited, but may be a cylindrical, prismatic, pouch or coin type. In addition, the lithium secondary battery may be used in a battery cell that is not only used as a power source of a small device, but also preferably used as a unit battery for a medium-to-large battery module including a plurality of battery cells.

According to still another exemplary embodiment of the present invention, a battery module including the lithium secondary battery as a unit cell and/or a battery pack including the same is provided.

The battery module or the battery pack may be used as a power source of any one or more medium-to-large devices including a power tool; an electric motor vehicle such as an electric vehicle (EV), a hybrid electric vehicle, and a plug-in hybrid electric vehicle (PHEV); and a power storage system.

Hereinafter, the present invention will be described in further detail with reference to examples. However, these examples are merely provided to exemplify the present invention, and thus the scope of the present invention will not be construed to be limited by these examples.

### Preparation Example 1. Preparation of positive electrode active material

### Example 1

A spherical Ni_{0.90}Co_{0.05}Mn_{0.05}(OH)₂ hydroxide precursor was synthesized through a coprecipitation method. Specifically, 50 wt% of NaOH and 18 wt% of NH₄OH were added to a 1.5 M aqueous solution of composite transition metal sulfuric acid in which nickel sulfate, cobalt sulfate, and manganese sulfate were mixed at a molar ratio of 90:5:5 in a 90 L reactor. The reactor was maintained at pH 12.0 and a temperature of 45 °C, and N₂, an inert gas, was input to the reactor to prevent the prepared precursor from being oxidized. After completion of synthesis and stirring, washing and dehydration were performed using a filter press (F/P) device to obtain an Ni_{0.90}Co_{0.05}Mn_{0.05}(OH)₂ hydroxide precursor. Afterward, the hydroxide precursor, LiOH (Li/(Ni+Co+Mn) molar ratio = 1.01), and H₃BO₃ (weighed so that the mole fraction of boron among the metal elements was 0.01 based on the overall composition of the hydroxide precursor) were mixed and subjected to heat treatment at 700 °C in an O₂ atmosphere for 12 hours, and then vacuum drying at 120 °C and washing were performed to obtain a positive electrode active material.

### Example 2

A spherical Ni_{0.90}Co_{0.05}Mn_{0.05}(OH)₂ hydroxide precursor was synthesized through a coprecipitation method. Specifically, 50 wt% of NaOH and 18 wt% of NH₄OH were added to a 1.5 M aqueous solution of composite transition metal sulfuric acid in which nickel sulfate, cobalt sulfate, and manganese sulfate were mixed at a molar ratio of 90:5:5 in a 90 L reactor. The reactor was maintained at pH 12.0 and a temperature of 45 °C, and N₂, an inert gas, was input to the reactor to prevent the prepared precursor from being oxidized. After completion of synthesis and stirring, washing and dehydration were performed using a filter press (F/P) device to obtain an Ni_{0.90}Co_{0.05}Mn_{0.05}(OH)₂ hydroxide precursor. Afterward, the hydroxide precursor, LiOH (Li/(Ni+Co+Mn) molar ratio = 1.01), and WO₃ (weighed so that the mole fraction of tungsten among the metal elements was 0.005 based on the overall composition of the hydroxide precursor) were mixed and subjected to heat treatment at 700 °C in an O₂ atmosphere for 12 hours, and then vacuum drying at 120 °C and washing were performed to obtain a positive electrode active material.

### Comparative Example 1

A spherical Ni_{0.90}Co_{0.05}Mn_{0.05}(OH)₂ hydroxide precursor was synthesized through a coprecipitation method. Specifically, 50 wt% of NaOH and 30 wt% of NH₄OH were added to a 1.5 M aqueous solution of composite transition metal sulfuric acid in which nickel sulfate, cobalt sulfate, and manganese sulfate were mixed at a molar ratio of 90:5:5 in a 90 L reactor. The reactor was maintained at pH 11.5 and a temperature of 60 °C, and N₂, an inert gas, was input to the reactor to prevent the prepared precursor from being oxidized. After completion of synthesis and stirring, washing and dehydration were performed using a filter press (F/P) device to obtain an Ni_{0.90}Co_{0.05}Mn_{0.05}(OH)₂ hydroxide precursor. Afterward, the hydroxide precursor and LiOH (Li/(Ni+Co+Mn) molar ratio = 1.01) were mixed and subjected to heat treatment at 670 °C in an O₂ atmosphere for 12 hours, and then vacuum drying at 120 °C and washing were performed to obtain a positive electrode active material.

### Comparative Example 2

A spherical Ni_{0.90}Co_{0.05}Mn_{0.05}(OH)₂ hydroxide precursor was synthesized through a coprecipitation method. Specifically, 50 wt% of NaOH and 30 wt% of NH₄OH were added to a 1.5 M aqueous solution of composite transition metal sulfuric acid in which nickel sulfate, cobalt sulfate, and manganese sulfate were mixed at a molar ratio of 90:5:5 in a 90 L reactor. The reactor was maintained at pH 11.5 and a temperature of 60 °C, and N₂, an inert gas, was input to the reactor to prevent the prepared precursor from being oxidized. After completion of synthesis and stirring, washing and dehydration were performed using a filter press (F/P) device to obtain an Ni_{0.90}Co_{0.05}Mn_{0.05}(OH)₂ hydroxide precursor. Afterward, the hydroxide precursor and LiOH (Li/(Ni+Co+Mn) molar ratio = 1.01) were mixed and subjected to heat treatment at 700 °C in an O₂ atmosphere for 12 hours, and then vacuum drying at 120 °C and washing were performed to obtain a positive electrode active material.

### Comparative Example 3

A positive electrode active material was prepared in the same manner as in Example 1, except that H₃BO₃ was used so that the mole fraction of boron among the metal elements was 0.015 based on the overall composition of the hydroxide precursor.

### Comparative Example 4

A spherical Ni_{0.90}Co_{0.05}Mn_{0.05}(OH)₂ hydroxide precursor was synthesized through a coprecipitation method. Specifically, 50 wt% of NaOH and 30 wt% of NH₄OH were added to a 1.5 M aqueous solution of composite transition metal sulfuric acid in which nickel sulfate, cobalt sulfate, and manganese sulfate were mixed at a molar ratio of 90:5:5 in a 90 L reactor. The reactor was maintained at pH 11.5 and a temperature of 60 °C, and N₂, an inert gas, was input to the reactor to prevent the prepared precursor from being oxidized. After completion of synthesis and stirring, washing and dehydration were performed using a filter press (F/P) device to obtain an Ni_{0.90}Co_{0.05}Mn_{0.05}(OH)₂ hydroxide precursor. Afterward, the hydroxide precursor, LiOH (Li/(Ni+Co+Mn) molar ratio = 1.01), and H₃BO₃ (weighed so that the mole fraction of boron among the metal elements was 0.02 based on the overall composition of the hydroxide precursor) were mixed and subjected to heat treatment at 700 °C in an O₂ atmosphere for 12 hours, and then vacuum drying at 120 °C and washing were performed to obtain a positive electrode active material.

### Comparative Example 5

A spherical Ni_{0.90}Co_{0.05}Mn_{0.05}(OH)₂ hydroxide precursor was synthesized through a coprecipitation method. Specifically, 50 wt% of NaOH and 30 wt% of NH₄OH were added to a 1.5 M aqueous solution of composite transition metal sulfuric acid in which nickel sulfate, cobalt sulfate, and manganese sulfate were mixed at a molar ratio of 90:5:5 in a 90 L reactor. The reactor was maintained at pH 11.5 and a temperature of 60 °C, and N₂, an inert gas, was input to the reactor to prevent the prepared precursor from being oxidized. After completion of synthesis and stirring, washing and dehydration were performed using a filter press (F/P) device to obtain an Ni_{0.90}Co_{0.05}Mn_{0.05}(OH)₂ hydroxide precursor. Afterward, the hydroxide precursor, LiOH (Li/(Ni+Co+Mn) molar ratio = 1.01), and H₃BO₃ (weighed so that the mole fraction of boron among the metal elements was 0.01 based on the overall composition of the hydroxide precursor) were mixed and subjected to heat treatment at 670 °C in an O₂ atmosphere for 12 hours, and then vacuum drying at 120 °C and washing were performed to obtain a positive electrode active material.

### Comparative Example 6

A spherical Ni_{0.90}Co_{0.05}Mn_{0.05}(OH)₂ hydroxide precursor was synthesized through a coprecipitation method. Specifically, 50 wt% of NaOH and 30 wt% of NH₄OH were added to a 1.5 M aqueous solution of composite transition metal sulfuric acid in which nickel sulfate, cobalt sulfate, and manganese sulfate were mixed at a molar ratio of 90:5:5 in a 90 L reactor. The reactor was maintained at pH 11.5 and a temperature of 60 °C, and N₂, an inert gas, was input to the reactor to prevent the prepared precursor from being oxidized. After completion of synthesis and stirring, washing and dehydration were performed using a filter press (F/P) device to obtain an Ni_{0.90}Co_{0.05}Mn_{0.05}(OH)₂ hydroxide precursor.

Afterward, the hydroxide precursor, LiOH (Li/(Ni+Co+Mn) molar ratio = 1.01), and H₃BO₃ (weighed so that the mole fraction of boron among the metal elements was 0.01 based on the overall composition of the hydroxide precursor) were mixed and subjected to heat treatment at 730 °C in an O₂ atmosphere for 12 hours, and then vacuum drying at 120 °C and washing were performed to obtain a positive electrode active material.

### Preparation Example 2. Manufacture of lithium secondary battery (half-cell)

94 wt% of each positive electrode active material prepared according to Preparation Example 1, 3 wt% of carbon black, and 3 wt% of a PVDF binder were dispersed in 30 g of N-methyl-2 pyrrolidone (NMP) to prepare a positive electrode slurry. The positive electrode slurry was uniformly applied on an aluminum thin film with a thickness of 15 µm and vacuum dried at 135 °C to manufacture a positive electrode for a lithium secondary battery.

A half-cell was manufactured using a lithium foil as a counter electrode to the positive electrode, a porous polyethylene membrane (Celgard 2300, thickness: 25 µm) as a separator, and an electrolyte in which LiPF₆ was dissolved at a concentration of 1.15 M in a mixed solvent of ethylene carbonate and ethyl methyl carbonate at a volume ratio of 3:7.

### Preparation Example 3. Manufacture of lithium secondary battery (full-cell)

90 wt% of each positive electrode active material prepared according to Preparation Example 1, 4.5 wt% of carbon black, and 5.5 wt% of a PVDF binder were dispersed in N-methyl-2 pyrrolidone (NMP) to prepare a positive electrode slurry.

The positive electrode slurry was uniformly applied on an aluminum thin film with a thickness of 15 µm and vacuum dried at 135 °C to manufacture a positive electrode for a lithium secondary battery in which a positive electrode active material layer was formed.

A full-cell was manufactured using a graphite electrode as a counter electrode to the positive electrode, a porous polyethylene membrane (Celgard 2300, thickness: 20 µm) as a separator, and an electrolyte in which LiPF₆ was dissolved at a concentration of 1.15 M in a mixed solvent of ethylene carbonate, dimethyl carbonate, and ethyl methyl carbonate at a volume ratio of 2:4:4.

### Experimental Example 1. XRD analysis of positive electrode active material

X-ray diffraction (XRD) analysis was performed to measure the crystallite size and the interplanar distance of the (003) plane of the positive electrode active material. The XRD analysis was performed through a Bruker D8 Endeavor diffractometer using Cu-Kα radiation (1.540598 Å).

Specifically, the crystallite size of the positive electrode active material was calculated from the Lvol-IB value through Rietveld refinement using TOPAS software from the diffraction pattern obtained through XRD analysis of each positive electrode active material prepared according to Preparation Example 1.

The lithium secondary batteries (half-cell) manufactured in Preparation Example 2 were charged/discharged twice using an electrochemical analysis device (Toscat-3100 from TOYO SYSTEM CO., LTD.) under the conditions of 25 °C, a voltage range of 3.0 V to 4.3 V, and 0.05 C/0.05 C, and then charged to 4.3 V Afterward, the positive electrode active materials were recovered from the half-cells and XRD analysis was performed to calculate the degree of peak splitting in the 2θ region of 18° to 20° from the (003) plane diffraction peak, and the maximum value (d1) and the minimum value (d2) of the interplanar distance (d-spacing) of the (003) plane.

The XRD analysis results are shown in Table 1 below.

**[Table 1]**

| Classification | Crystallite size (nm) | Peak split (°) | d1 (nm) | d2 (nm) | Δd (d1-d2) (nm) |
|---|---|---|---|---|---|
| Example 1 | 100 | 0.679 | 0.4775 | 0.4608 | 0.0167 |
| Example 2 | 90.5 | 0.681 | 0.477 | 0.4598 | 0.0172 |
| Comparative Example 1 | 104 | 0.938 | 0.4789 | 0.456 | 0.0229 |
| Comparative Example 2 | 141.3 | 0.944 | 0.4796 | 0.4565 | 0.0231 |
| Comparative Example 3 | 80.8 | 0.777 | 0.4720 | 0.4529 | 0.0191 |
| Comparative Example 4 | 65.7 | 0.873 | 0.4771 | 0.4559 | 0.0212 |
| Comparative Example 5 | 65.5 | 0.937 | 0.48 | 0.457 | 0.0230 |
| Comparative Example 6 | 135.4 | 0.93 | 0.4819 | 0.4601 | 0.0218 |

| | | | | | |
|---|---|---|---|---|---|
| *Peak split represents the difference in 2θ between two split peaks in the 2θ region of 18° to 20°. | | | | | |

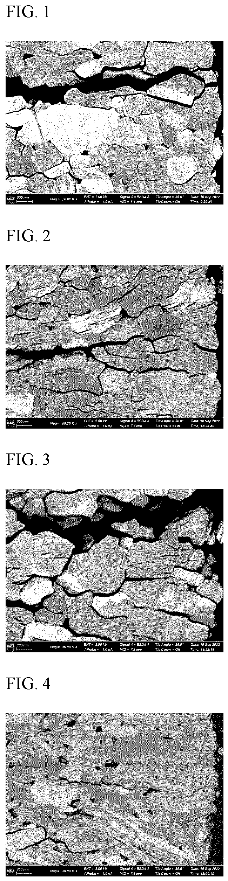

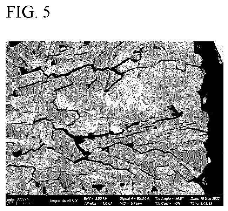

Referring to FIGS. 1 to 5 showing cross-sectional SEM images of the positive electrode active materials (Example 1, Comparative Examples 1, 2, 4, and 5) recovered from the half-cell, it can be seen that a lot of line defects occur in the primary particles of the positive electrode active materials according to Comparative Examples 1, 2, 4, and 5, compared to the positive electrode active material according to Example 1.

### Experimental Example 2. Evaluation of electrochemical properties of lithium secondary battery (half-cell)

For the lithium secondary batteries (half-cell) manufactured in Preparation Example 2, charge/discharge experiments were performed using an electrochemical analysis device (Toscat-3100 from TOYO SYSTEM CO., LTD.) at 25 °C, a voltage of 3.0 V to 4.3 V, and a discharge rate of 1.0 C/0.1 C to measure initial charge capacity, initial discharge capacity, initial efficiency, and 1.0 C/0.1 C rate performance.

For the same lithium secondary batteries (half-cell), after charging/discharging was performed 100 times using an electrochemical analysis device (Toscat-3100 from TOYO SYSTEM CO., LTD.) under conditions of 25 °C, a voltage range of 3.0 V to 4.3 V, and 1 C/1 C, the ratio of the discharge capacity at the 100^{th} cycle to the initial capacity (cycle capacity retention) was measured.

The measurement results are shown in Table 2 below.

**[Table 2]**

| Classification | Charge capacity (mAh/g) | Discharge capacity (mAh/g) | Initial efficiency (%) | 1.0 C/0.1 C Rate (%) | Retention@ 100 cy (%) |
|---|---|---|---|---|---|
| Example 1 | 240.7 | 222.7 | 92.5 | 93.3 | 96.3 |
| Example 2 | 239.4 | 221.2 | 92.3 | 93.8 | 96.6 |
| Comparative Example 1 | 238.6 | 216.9 | 90.9 | 92.7 | 95.5 |
| Comparative Example 2 | 239.1 | 224.3 | 93.8 | 92.8 | 82.4 |
| Comparative Example 3 | 240.5 | 220.8 | 91.8 | 92.9 | 94.6 |
| Comparative Example 4 | 240.4 | 220.2 | 91.6 | 92.5 | 95.7 |
| Comparative Example 5 | 238.7 | 214.0 | 89.6 | 93.2 | 94. 8 |
| Comparative Example 6 | 241.4 | 227.7 | 94.3 | 91.9 | 87.2 |

As can be seen from the crystallite sizes in Table 1, it was confirmed that the positive electrode active materials according to Examples 1 and 2 use a dopant that hinders the growth of the primary particles constituting the lithium composite oxide during the calcination process and increase the calcination temperature to suppress the excessive growth of primary particles and improve the crystallinity of primary particles, thereby maintaining the electrochemical properties including initial efficiency and rate performance of a lithium secondary battery using the lithium composite oxide as a positive electrode active material while reducing crystal defects in the crystal structure of the primary particles constituting the lithium composite oxide to improve lifetime characteristics.

### Experimental Example 3. Measurement of volume change of lithium secondary battery (half-cell)

For the lithium secondary batteries (full-cell) manufactured in Preparation Example 3, the 3-cycle formation process was completed using an electrochemical analysis device (Toscat-3100 from TOYO SYSTEM CO., LTD.) under the conditions of 25 °C, a voltage range of 2.75 V to 4.3 V, and 0.2 C/0.2 C. Afterward, the positive electrode charged to 4.3 V was recovered from the full-cell to manufacture a new pouch cell in which an electrolyte was injected. Each pouch cell was stored at 70 °C, and the change in volume compared to the initial pouch cell volume was measured using an electronic densimeter (SID-220 W) after 14 and 28 days, respectively.

The measurement results are shown in Table 3 below.

**[Table 3]**

| Classification | Volume increase rate (%) | |
|---|---|---|
| | 14-day | 28-day |
| Example 1 | 16.1% | 43.7% |
| Example 2 | 15.8% | 45.2% |
| Comparative Example 1 | 22.5% | 56.0% |
| Comparative Example 3 | 18.2% | 55.2% |
| Comparative Example 4 | 18.9% | 63.0% |
| Comparative Example 5 | 41.3% | 107.9% |

Referring to the results in Table 3, it can be seen that among full-cells using positive electrode active materials with similar crystallite sizes, the volume increase rate of full-cells using the positive electrode active materials according to Examples 1 and 2 is lower than the volume increase rate of full-cells using the positive electrode active materials according to Comparative Examples 1, 3, 4, and 5.

In other words, since the positive electrode active material according to the present invention suppresses the excessive growth of primary particles and improves the crystallinity of primary particles, it is possible to prevent and/or mitigate gas generation and swelling in a lithium secondary battery compared to lithium secondary batteries using other positive electrode active materials with similar particle sizes.

According to the present invention, it is possible to maintain the electrochemical properties of a lithium secondary battery using a lithium composite oxide as a positive electrode active material while preventing and/or mitigating gas generation and swelling due to the positive electrode active material in a lithium secondary battery by using a dopant that hinders the growth of primary particles constituting the lithium composite oxide during the calcination process and increasing the calcination temperature to suppress the excessive growth of primary particles and improve the crystallinity of primary particles.

In addition, the present invention can prevent and/or mitigate cracks occurring due to strain caused by random volume contraction/expansion of primary particles during charging/discharging by reducing crystal defects in the crystal structure of the primary particles constituting the lithium composite oxide.

Although embodiments of the present invention have been described above, those skilled in the art can make various modifications and changes to the present invention by adding, changing, or deleting components without departing from the spirit of the present invention as set forth in the claims, which will be included within the scope of rights of the present invention.

## Claims

1. A positive electrode active material comprising:
primary particles capable of intercalation/deintercalation of lithium; and
secondary particles in which the primary particles are aggregated,
wherein the secondary particles include at least one selected from nickel, cobalt, manganese, and aluminum, and based on a half-cell, in a charged state of 4.3 V, the difference (Δd) between the maximum value (d1) and the minimum value (d2) of the interplanar distance (d-spacing) of the (003) plane in the primary particles is less than 0.019 nm.

2. The positive electrode active material of claim 1, wherein the maximum value (d1) of the interplanar distance (d-spacing) of the (003) plane in the crystal structure of the primary particles present in the secondary particles is less than 0.4794 nm.

3. The positive electrode active material of any one of claims 1 to 2, wherein the minimum value (d2) of the interplanar distance (d-spacing) of the (003) plane in the crystal structure of the primary particles present in the secondary particles is 0.461 nm or more.

4. The positive electrode active material of any one of claims 1 to 3, wherein the positive electrode active material has a crystallite size of 70 nm to 130 nm.

5. The positive electrode active material of any one of claims 1 to 4, wherein the secondary particles are represented by Chemical Formula 1 below,
[Chemical Formula 1] LiₐNi_{1-(b+c+d)}Co_{b}M1_{c}M2_{d}O₂
wherein,
M1 is at least one selected from Mn and Al,
M2 is at least one selected from Na, K, Mg, Ca, Ba, Mn, B, Ce, Hf, Ta, Cr, F, Al, V, Ti, Fe, Zr, Zn, Si, Y, Nb, Ga, Sn, Mo, W, P, Sr, Ge, Nd, Gd, and Cu,
M1 and M2 are different, and
0.5≤a≤1.5, 0≤b≤0.20, 0≤c≤0.30, 0≤d≤0.10.

6. The positive electrode active material of claim 5, wherein the mole fraction of nickel to all elements excluding lithium in the secondary particles is 70% or more.

7. The positive electrode active material of claim 5, wherein M2 includes at least one selected from B, Al, Nb, and W.

8. The positive electrode active material of any one of claims 1 to 7, wherein during XRD analysis of the positive electrode active material, peak splitting does not occur in the 2θ region of 18° to 20°.

9. The positive electrode active material of any one of claims 1 to 8, wherein during XRD analysis of the positive electrode active material, the difference in 2θ between the two split peaks in the 2θ region of 18° to 20° is 0.75° or less.

10. A positive electrode comprising the positive electrode active material according to any one of claims 1 to 9.

11. A lithium secondary battery using the positive electrode according to claim 10.
